# EUROPÄISCHE PATENTSCHRIFT

(11) **EP 1 712 832 B1**
(45) Veröffentlichungstag und Bekanntmachung des Hinweises auf die Patenterteilung: **14.11.2007**
(21) Anmeldenummer: 06007362.4
(22) Anmeldetag: 07.04.2006
(51) Int. Cl.: F21V 3/00

(54) **Leuchte**
Lighting device
Dispositif d'éclairage

(30) Priorität: 12.04.2005 DE 102005017045
(43) Veröffentlichungstag der Anmeldung: 18.10.2006
(73) Patentinhaber: HERNER GLAS BERND HOFFBAUER GmbH & CO. Leuchten und Industrieglas KG, D-44628 Herne (DE)
(72) Erfinder: Hoffbauer, Bernd, 44628 Herne (DE)
(74) Vertreter: Ostriga, Sonnet, Wirths & Roche

(56) Entgegenhaltungen:
- EP-A- 1 369 064
- EP-A- 1 469 141
- DE-B- 1 157 567
- FR-A- 2 457 436
- US-A- 4 500 947

## Beschreibung

Die Erfindung betrifft eine Leuchte entsprechend dem Anspruch 1. Eine solche Leuchte ist in der DE 101 01 893 C1 beschrieben.

Die von der DE 101 01 893 C1 bekannte Leuchte weist als Leuchtenkörper einen ein elektrisches Leuchtmittel aufnehmenden Schutzzylinder aus Glas auf. Die Leuchtenkörperwand des Leuchtenkörpers besteht aus durchsichtigem Glas mit einer mattierten durchscheinenden Außenmantelfläche. An der Außenmantelfläche ist als lichtleitendes Element mindestens ein plattenförmiger Glaskörper mit einer Schmalfläche mittels einer Klebefuge aus durchsichtigem Kleber befestigt. Dabei bildet der durchsichtige Kleber eine lichtleitende Brücke zwischen dem Leuchtenkörper und dem lichtleitenden Element.

Das lichtleitende Element der von der DE 101 01 893 C1 bekannten Leuchte stellt eine Lichtleitplatte dar, an deren inneren Grenzflächen sich das von der Lichtquelle ausgehende und die Leuchtenkörperwand durchdringende Licht entweder durch Totalreflektion fortpflanzt oder an den Stellen aus der Lichtleitplatte austritt, die lediglich durchscheinend sind, also beispielsweise mattiert oder gefärbt sind.

Eine dem Gegenstand der DE 101 01 893 C1 verwandte Leuchte ist in der DE 43 09 733 A1 beschrieben.

Von der DE 101 16 740 A1 ist ein insgesamt lichtdurchlässiges zweischichtiges Leuchtenglas bekannt, dessen matte Schicht, nämlich dessen Opalglasschicht, der Lichtquelle zugewandt ist, während die sich an die Opalglasschicht anschließende, der Lichtquelle abgewandte Klarglasschicht die Außenfläche des Leuchtenglases bildet. Das von der DE 101 16 740 A1 bekannte Leuchtenglas hat den besonderen Vorteil, dass die innenliegende Opalglasschicht das von der Lichtquelle abgestrahlte Licht gleichmäßig verteilt an die Klarglasschicht weitergibt.

Von der DE 198 01 568 C2 ist ein Leuchtenschirm bekannt, dessen eine Lichtquelle aufnehmender Innenraum von einem lichtlenkenden Stab aus Glas oder aus Acrylglas quer durchsetzt ist, dessen beide freie Enden den Leuchtenschirm an diametral gegenüberliegenden Stellen in Bohrungen der Leuchtenschirmwand durchsetzen und dort gegebenenfalls durch Klebestellen gehalten sind.

Aus der DE 1157 567 ist eine Abdeckwanne aus Kunststoff für langgestreckte Beleuchtungskörper bekannt. Zur Erzielung eines besonderen Lichteffekts ist der lichtdurchlässige Teil in Längsrichtung mit farbigen Rippen durchzogen.

Ausgehend von der Leuchte gemäß der DE 101 01 893 C1, liegt der Erfindung die Aufgabe zugrunde, eine Leuchte zu schaffen, bei welcher die Wirksamkeit der lichtleitenden Elemente verbessert ist.

Diese Aufgabe wird entsprechend der Gesamtheit der Merkmale des Anspruchs 1 gelöst.

Im Unterschied zu der bekannten Leuchte gemäß der DE 101 01 893 C1 weist die Leuchtenkörperwand erfindungsgemäß einen deren gesamte Wanddicke durchsetzenden Schlitz auf. Der Schlitz ist zwischen ihn beidseitig begrenzenden streifenartigen Flächen der Leuchtenkörperwand gebildet. Zwischen den Gegenflächen des lichtleitenden Elements und den streifenartigen Flächen der Leuchtenkörperwand sind die Klebe-Fügeflächen vorhanden. Diese vorbeschriebene erfindungsgemäße Ausgestaltung ist Voraussetzung dafür, dass das lichtleitende Element mit seiner das Licht aufnehmenden und das Licht übertragenden Schmalfläche im Unterschied zur Leuchte gemäß der DE 101 01 893 C1 dem Aufnahmehohlraum, also auch der Lichtquelle, unmittelbar zugewandt ist. Diese unmittelbare Zuwendung zur Lichtquelle der das Licht aufnehmenden und das Licht übertragenden Schmalfläche des lichtleitenden Elements bedeutet eine verlustarme Übertragung des von der Lichtquelle ausgehenden Lichts in das lichtleitende Element hinein.

Bei der bekannten Leuchte gemäß der DE 198 01 568 C2 ist zwar die überwiegende Länge des lichtlenkenden Stabes dem von der Lichtquelle abgestrahlten Licht unmittelbar ausgesetzt, jedoch sind bei der bekannten Leuchte die mit den erfindungsgemäßen Schmalflächen des lichtleitenden Elements im weitesten Sinne vergleichbaren Stirnflächen des bekannten lichtlenkenden Stabes außen vor der Leuchtenschirmwand angeordnet. Jene Stirnflächen nehmen also nicht an der Lichtaufnahme und Lichtübertragung teil.

Eine wirkungsvolle Einleitung des von der Lichtquelle ausgehenden Lichts in das lichtleitende Element hinein ist in weiterer Ausgestaltung der Erfindung dadurch gegeben, dass die dem Aufnahmehohlraum zugewandte innere Schmalfläche des lichtleitenden Elements eine klar durchsichtige, insbesondere polierte Oberfläche aufweist.

Entsprechend der Erfindung kann das lichtleitende Element innerhalb des die Leuchtenkörperwand durchsetzenden Schlitzes unterschiedlich angeordnet sein. So kann z.B. das lichtleitende Element mit seiner dem Aufnahmehohlraum zugewandten inneren Schmalfläche gänzlich oder teilweise zwischen den streifenartigen Flächen des Schlitzes angeordnet sein. Demnach könnte sich die innere Schmalfläche des lichtleitenden Elements auch zwischen den streifenartigen Flächen des Schlitzes befinden.

Andererseits sieht die Erfindung auch vor, dass das lichtleitende Element einen in den Aufnahmehohlraum hineinragenden inneren Überstand bildet. Dies bedeutet zugleich, dass die das Licht aufnehmende und das Licht übertragende innere Schmalfläche von der Innenfläche des Leuchtenkörpers distanziert, jedoch der Lichtquelle angenähert ist, um auf diese Weise eine größere Lichtmenge in das lichtleitende Element hineinzuführen.

Eine andere erfindungsgemäße Ausführungsform sieht vor, dass das lichtleitende Element mit seiner vom Aufnahmehohlraum wegweisenden äußeren Schmalfläche gänzlich oder teilweise zwischen den streifenartigen Flächen des Schlitzes angeordnet ist. Diese Erfindungsvariante bedeutet auch, dass die das Licht emittierende äußere Schmalfläche des lichtleitenden Elements zurückversetzt innerhalb des Schlitzes angeordnet oder mit der benachbarten Außenfläche der Leuchtenkörperwand bündig ist.

Eine andere erfindungsgemäße Ausführungsform besteht darin, dass das lichtleitende Element einen vom Aufnahmehohlraum weg nach außen hin vorragenden äußeren Überstand bildet. Dies Ausführungsform bietet die Möglichkeit, nicht nur die nach außen weisende Schmalfläche des lichtleitenden Elements, sondern auch dessen Hauptflächen lichtemittierend auszubilden.

Um die Lichtübertragungseigenschaften von der Lichtquelle in das lichtleitende Element hinein weiter zu verbessern, sieht die Erfindung außerdem vor, dass die Hauptflächen des inneren Überstandes des lichtleitenden Elements jeweils eine klardurchsichtige, insbesondere polierte Oberfläche aufweisen.

Eine andere erfindungsgemäße Ausführungsform, mit welcher die vom Aufnahmehohlraum wegweisende äußere Schmalfläche des lichtleitenden Elements signifikant als lichtemittierende Fläche ausgebildet ist, besteht darin, dass die vom Aufnahmehohlraum wegweisende äußere Schmalfläche des lichtleitenden Elements matt ausgebildet, insbesondere aufgeraut ist. Die Hauptflächen des äußeren Überstandes des lichtleitenden Elements können zusätzlich oder alternativ als lichtemittierende Flächen ausgebildet sein, indem die Hauptflächen des äußeren Überstandes des lichtleitenden Elements matt ausgebildet, insbesondere aufgeraut sind.

Weiterhin ist entsprechend der Erfindung vorgesehen, dass die der Lichtquelle zugewandte innere Hauptfläche der Leuchtenkörperwand matt ausgebildet ist.

Auf diese Weise wird das von Lichtquelle ausgehende Licht einerseits diffus reflektiert, um dem lichtleitenden Element eine zusätzliche Lichtmenge zuzuführen und um andererseits das von der Lichtquelle ausgehende Licht gleichmäßig über die Leuchtenkörperwand zu verteilen.

In diesem vorbeschriebenen Zusammenhang sieht die Erfindung eine abgewandelte Ausführungsform mit einem Zweischichtenglas vor, die dadurch gekennzeichnet ist, dass die der Lichtquelle zugewandte matte Hauptfläche der Leuchtenkörperwand von einer Opalglasschicht gebildet ist, während der sich an die Opalglasschicht nach außen hin anschießende Leuchtenkörperwandbereich von einer durchsichtigen, und zwar von einer klar durchsichtigen Schicht, gebildet ist. Die Vorteile einer solchen Anordnung sind in einem anderen Zusammenhang in der DE 101 16 740 A1 (s. dort Sp. 1, Z. 35-39) beschrieben.

Eine besonders eigenartige erfindungsgemäße Ausgestaltung besteht darin, dass der Leuchtenkörper aus mehreren Leuchtenkörperteilwänden zusammengefügt ist, welche mit ihren jeweils gegeneinander weisenden und einander benachbarten Schmalflächen-Paaren, die jeweils einen Schlitz begrenzenden streifenartigen Flächen zur Klebefügung mit den Gegenflächen eines lichtleitenden Elements bilden.

Während es ansonsten möglich ist, den Schlitz zur Klebefügung mit dem lichtleitenden Element im weitesten Sinne durch Werkstoffabtrag, wie z.B. durch Strahlpartikel oder durch Wasserschneiden, einzubringen, können entsprechend der Erfindung Schlitze dadurch gebildet werden, dass jeweils zwei Schmalseiten benachbarter Leuchtenteilkörperwände, den Schlitz bildend, aneinander angenähert sind.

Eine besondere erfindungsgemäße Ausführungsform besteht darin, dass zwei mit ihren Hohlseiten einander zugekehrte etwa schalenartige Leuchtenkörperteilwände mit ihren beidendseitigen, die streifenartigen Flächen bildenden Schmalflächen zwei Schlitze bilden, welche jeweils ein lichtleitendes Element aufnehmen.

Dabei kann die Querschnittskontur beider Leuchtenkörperteilwände jeweils entlang derselben Krümmung, wie z.B. parabel-, ellipsen- oder kreisförmig, verlaufen.

Ein besonders wesentlicher Aspekt der Erfindung besteht darin, das lichtleitende Element oder die lichtleitenden Elemente jeweils zur Befestigung der Leuchte, so z.B. für die Funktion einer Hänge- oder Standleuchte, heranzuziehen. Dieses kann erfindungsgemäß dadurch geschehen, dass der äußere und/oder der innere Überstand je eines lichtleitenden Elements einen Befestigungsbereich, wie z.B. eine Befestigungsöffnung, für die Leuchte bildet.

Der innere Überstand des lichtleitenden Elements kann die Kontur eines langgestreckten schmalen Dreiecks aufweisen, wobei der breitere obere Bereich des dreieckförmig konturierten lichtleitenden Elements mit der Befestigungsöffnung versehen ist.

Demgegenüber bildet der äußere Überstand des lichtleitenden Elements eine ansprechende dekorative Gestalt in der Art, dass der äußere Überstand des lichtleitenden Elements die Kontur eines langgestreckten schmalen Rechtecks aufweist.

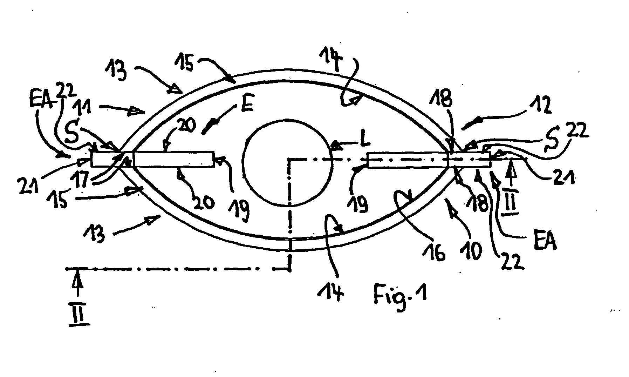

In den Zeichnungen ist ein bevorzugtes Ausführungsbeispiel entsprechen der Erfindung dargestellt, es zeigt
Fig. 1 eine Draufsicht auf eine Leuchte, im übrigen entsprechend der in Fig. 2 mit I bezeichneten Blickrichtung,
Fig. 2 einen vertikalen Teilschnitt entsprechend der in Fig. 1 mit II-II bezeichneten Schnittlinie und

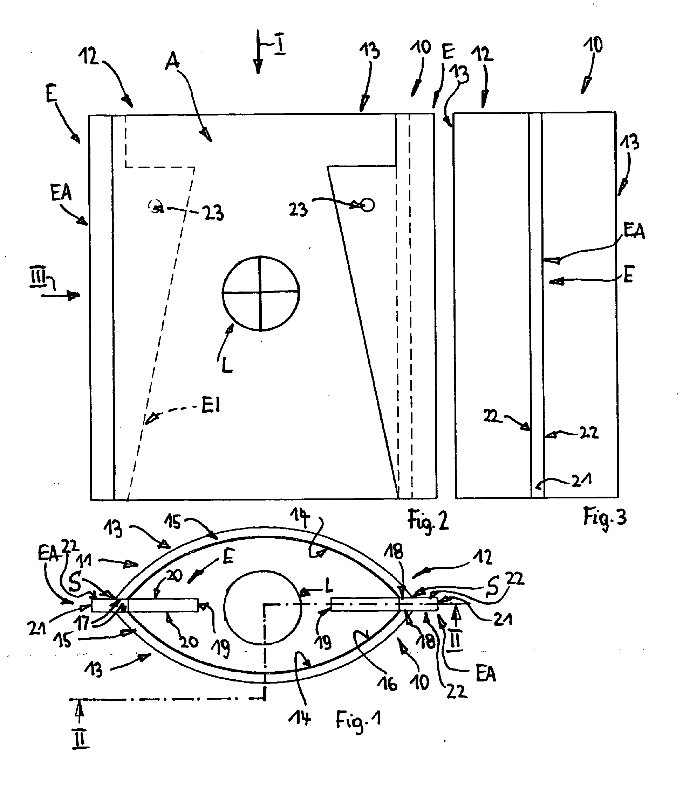

Fig. 3 eine Seitenansicht entsprechend der in Fig. 1 mit III bezeichneten Blickrichtung.

Eine Leuchte 10 weist einen Leuchtenkörper 11 aus lichtdurchlässigem Werkstoff, und zwar aus Glas auf. Der Leuchtenkörper 11 weist eine insgesamt mit 12 bezeichnete Leuchtenkörperwand auf, welche aus zwei etwa schalenartigen Leuchtenkörperteilwänden 13 zusammengesetzt ist.

Jede Leuchtenkörperteilwand 13 besteht aus einer gebogenen zweischichtigen Glasplatte, die mit einer inneren Opalglasschicht 14 und mit einer sich außen an die Opalglasschicht 14 stoffschlüssig anschließenden durchsichtigen, und zwar klardurchsichtigen Schicht 15 versehen ist. Die Opalglasschicht 14 ist demnach durchscheinend und bildet eine einer schematisch dargestellten elektrischen Lichtquelle L zugewandte matte Innenfläche 16, welche das von der Lichtquelle L ausgehende Licht zum Teil diffus reflektiert.

Die Lichtquelle L ist in einem zwischen den Hohlseiten der beiden schalenartigen Leuchtkörperteilwände 13 befindlichen Aufnahmehohlraum A angeordnet.

Die beiden schalenartigen Leuchtenkörperteilwände 13 bilden jeweils mit ihren beiden einander zugekehrten Schmalflächen streifenartige Flächen 17, welche jeweils zwischen sich einen Schlitz S bilden. In diesem Schlitz S ist jeweils ein etwa plattenförmiges, im vorliegenden Fall ebenes lichtleitendes Element E aufgenommen. Die an den streifenartigen Flächen 17 anliegenden Gegenflächen des lichtleitenden Elements E sind mit 18 bezeichnet.

Die streifenförmigen Flächen 17 und die Gegenflächen 18 bilden Klebe-Fügeflächen zur Aufnahme eines klardurchsichtigen Klebers, welcher bei der Herstellung der Klebefügung möglichst dünn aufgebracht werden sollte. Der Kleber ist vorzugsweise ein unter UV-Bestrahlung aushärtender hinreichend temperaturbeständiger Silikonkleber. Die jeweils zwischen zwei Flächen 17 und 18 vorhandene Klebeschicht ist in den Zeichnungen nicht näher gekennzeichnet.

Jedes lichtleitende Element E weist einen in den Aufnahmeraum A hinein ragenden inneren Überstand EI und einen nach außen vorragenden äußeren Überstand EA auf. Innerer und äußerer Überstand EI und EA ragen jeweils aus dem Schlitz S beidseitig heraus.

Die innere Schmalfläche 19 eines jeden lichtleitenden Elements E weist eine klardurchsichtige, insbesondere polierte Oberfläche auf. Im vorliegenden Anwendungsfall weisen auch die beiden Hauptflächen 20 des inneren Überstandes EI jeweils eine klardurchsichtige, insbesondere polierte Oberfläche auf.

Die vom Aufnahmehohlraum A weg weisende äußere Schmalfläche 21 des äußeren Überstandes EA des jeweiligen lichtleitenden Elements E ist matt ausgebildet, insbesondere aufgeraut. Auch können die beiden Hauptflächen 22 des jeweiligen äußeren Überstandes EA matt ausgebildet, insbesondere aufgeraut sein. Die Schmalfläche 21 stellt demnach eine signifikant lichtemittierende Fläche dar. Für den Fall, dass sie aufgeraut sind, bilden auch die Hauptflächen 22 lichtemittierende Flächen.

Die Querschnittskontur der beiden Leuchtenkörperteilwände 13 ist gekrümmt und erstreckt sich im vorliegenden Anwendungsfall jeweils entlang derselben Krümmung, wie z.B. parabel-, ellipsen- oder kreisförmig. Der jeweilige innere Überstand El eines lichtleitenden Elements E weist die Kontur eines langgestreckten schmalen Dreiecks auf, welches im breiteren oberen Bereich stufenförmig abgesetzt ist. Der äußere Überstand EA des jeweiligen lichtleitenden Elements E besitzt die Kontur eines langgestreckten schmalen Rechtecks.

Jeder breitere obere Bereich des inneren Überstandes El ist mit einer Befestigungsöffnung 23 zur Aufnahme eines Aufhängeelements, wie z.B. einer Litze, versehen.

## Patentansprüche

1. Leuchte (10) mit einem einen Aufnahmehohlraum (A) für eine Lichtquelle (L) bildenden, aus mindestens teilweise lichtdurchlässigem Werkstoff, wie z.B. aus Glas, bestehenden Leuchtenkörper (11), dessen mindestens eine Breitfläche (16) seiner Leuchtenkörperwand (12) matt ausgebildet ist, und mit mindestens einem aus durchsichtigem Werkstoff, wie z.B. aus Glas, bestehenden im wesentlichen plattenförmigen lichtleitenden Element (E), welches mittels Klebe-Fügeflächen (17, 18) an der Leuchtenkörperwand (12) befestigt ist, wobei die Leuchtenkörperwand (12) mindestens einen letztere auf gesamter Wanddicke durchsetzenden Schlitz (S) aufweist, dessen den Schlitz (S) beidseitig begrenzende streifenartige Flächen (17) das lichtleitende Element (E) mindestens teilweise zwischen sich aufnehmen und gemeinsam mit vom lichtleitenden Element (E) gebildeten Gegenflächen (18) die Klebe-Fügeflächen (17, 18) bilden, wobei das lichtleitende Element (E) eine unmittelbar dem Aufnahmehohlraum (A) zugewandte, Licht aufnehmende und Licht übertragende innere Schmalfläche (19) bildet, **dadurch gekennzeichnet, dass** die dem Aufnahmehohlraum (A) zugewandte innere Schmalfläche (19) des lichtleitenden Elements (E) eine klardurchsichtige, insbesondere polierte Oberfläche aufweist, und dass das lichtleitende Element (E) einen in den Aufnahmehohlraum (A) hineinragenden inneren Überstand (EI) bildet.

2. Leuchte nach Anspruch 1, **dadurch gekennzeichnet, dass** das lichtleitende Element (E) mit seiner dem Aufnahmehohlraum (A) zugewandten inneren Schmalfläche (19) gänzlich oder teilweise zwischen den streifenartigen Flächen (17) des Schlitzes (S) angeordnet ist.

3. Leuchte nach einem der Ansprüche 1 oder 2, **dadurch gekennzeichnet, dass** das lichtleitende Element (E) mit seiner vom Aufnahmehohlraum (A) wegweisenden äußeren Schmalfläche (21) gänzlich oder teilweise zwischen den streifenartigen Flächen (17) des Schlitzes (S) angeordnet ist.

4. Leuchte nach einem der Ansprüche 1 bis 3, **dadurch gekennzeichnet, dass** das lichtleitende Element (E) einen vom Aufnahmehohlraum (A) weg nach außen hin vorragenden äußeren Überstand (EA) bildet.

5. Leuchte nach einem der Ansprüche 1 bis 4, **dadurch gekennzeichnet, dass** die Breitflächen (20) des inneren Überstandes (EI) des lichtleitenden Elements (E) jeweils eine klardurchsichtige, insbesondere polierte Oberfläche aufweisen.

6. Leuchte nach einem der Ansprüche 1 bis 5, **dadurch gekennzeichnet, dass** die vom Aufnahmehohlraum (A) wegweisende äußere Schmalfläche (21) des lichtleitenden Elements matt ausgebildet, insbesondere aufgeraut ist.

7. Leuchte nach einem der Ansprüche 1 bis 6, **dadurch gekennzeichnet, dass** die Breitflächen (22) des äußeren Überstandes (EA) des lichtleitenden Elements (E) matt ausgebildet, insbesondere aufgeraut sind.

8. Leuchte nach einem der Ansprüche 1 bis 7, **dadurch gekennzeichnet, dass** die der Lichtquelle (L) zugewandte innere Breitfläche (16) der Leuchtenkörperwand (12) matt ausgebildet ist.

9. Leuchte nach einem der Ansprüche 1 bis 8, **dadurch gekennzeichnet, dass** die der Lichtquelle (L) zugewandte matte Breitfläche (16) der Leuchtenkörperwand (12) von einer Opalglasschicht (14) gebildet ist, während der sich an die Opalglasschicht (14) nach außen hin anschließende Leuchtenkörperwandbereich von einer durchsichtigen Schicht (15) gebildet ist.

10. Leuchte nach einem der Ansprüche 1 bis 9, **dadurch gekennzeichnet, dass** der Leuchtenkörper (11) aus mehreren Leuchtenkörperteilwänden (13) zusammengefügt ist, welche mit ihren jeweils gegeneinander weisenden und einander benachbarten Schmalflächen-Paaren die jeweils einen Schlitz (S) begrenzenden streifenartigen Flächen (17) zur Klebefügung mit den Gegenflächen (18) eines lichtleitenden Elements (E) bilden.

11. Leuchte nach einem der Ansprüche 1 bis 10, **dadurch gekennzeichnet, dass** zwei mit ihren Hohlseiten einander zugekehrte etwa schalenartige Leuchtenkörperteilwände (13) mit ihren beidendseitigen, die streifenartigen Flächen (17) bildenden Schmalflächen zwei Schlitze (S) bilden, weiche jeweils ein lichtleitendes Element (E) aufnehmen.

12. Leuchte nach Anspruch 11, **dadurch gekennzeichnet, dass** die Querschnittskontur beider Leuchtenkörperteilwände (13) jeweils entlang derselben Krümmung, wie z.B. parabel-, ellipsen- oder kreisförmig verläuft.

13. Leuchte nach einem der Ansprüche 1 bis 12, **dadurch gekennzeichnet, dass** der äußere (EA) und/oder der innere (El) Überstand je eines lichtleitenden Elements einen Befestigungsbereich, wie z.B. eine Befestigungsöffnung (23), für die Leuchte (10) bilden.

14. Leuchte nach einem der Ansprüche 1 bis 13, **dadurch gekennzeichnet, dass** der innere Überstand (El) des lichtleitenden Elements (E) die Kontur eines langgestreckten schmalen Dreiecks aufweist

15. Leuchte nach Anspruch 13 oder 14, **dadurch gekennzeichnet, dass** der breitere obere Bereich des dreieckförmig konturierten inneren Überstandes (EI) des lichtleitenden Elements (E) mit der Befestigungsöffnung (23) versehen ist.

16. Leuchte nach einem der Ansprüche 1 bis 15, **dadurch gekennzeichnet, dass** der äußere Überstand (EA) des lichtleitenden Elements (E) die Kontur eines langgestreckten schmalen Rechtecks aufweist.

## Claims

1. Lighting device (10) with a lighting device body (11) which forms a mounting cavity (A) for a light source (L), consists at least in part of translucent material, such as, e.g. of glass, and whose at least one broad face (16) of its lighting device body wall (12) is of matt formation, and with at least one substantially plate-shaped light-conducting element (E) which consists of transparent material, such as, e.g. of glass, and is fastened by means of adhesive joining faces (17, 18) to the lighting device body wall (12), wherein the lighting device body wall (12) comprises at least one slot (S) which passes through the latter over the entire wall thickness and whose strip-like faces (17) defining the slot (S) on both sides hold the light-conducting element (E) at least in part between them and, together with mating faces (18) formed by the light-conducting element (E), form the adhesive joining faces (17, 18), wherein the light-conducting element (E) forms a light-absorbing and light-transmitting inner narrow face (19) which directly faces the mounting cavity (A), **characterised in that** the inner narrow face (19), which faces the mounting cavity (A), of the light-conducting element (E) has a clear transparent, in particular polished surface, and that the light-conducting element (E) forms an inner projecting length (E) which projects into the mounting cavity (A).

2. Lighting device according to Claim 1, **characterised in that** the light-conducting element (E) is disposed with its inner narrow face (19) which faces the mounting cavity (A) entirely or in part between the strip-like faces (17) of the slot (S).

3. Lighting device according to either of Claims 1 and 2, **characterised in that** the light-conducting element (E) is disposed with its outer narrow face (21) which points away from the mounting cavity (A) entirely or in part between the strip-like faces (17) of the slot (S).

4. Lighting device according to any one of Claims 1 to 3, **characterised in that** the light-conducting element (E) forms an outer projecting length (EA) which projects outwards away from the mounting cavity (A).

5. Lighting device according to any one of Claims 1 to 4, **characterised in that** the broad faces (20) of the inner projecting length (EI) of the light-conducting element (E) in each case have a clear transparent, in particular polished surface.

6. Lighting device according to any one of Claims 1 to 5, **characterised in that** the outer narrow face (21), which points away from the mounting cavity (A), of the light conducting element is of matt formation, being in particular roughened.

7. Lighting device according to any one of Claims 1 to 6, **characterised in that** the broad faces (22) of the outer projecting length (EA) of the light conducting element (E) are of matt formation, being in particular roughened.

8. Lighting device according to any one of Claims 1 to 7, **characterised in that** the inner broad face (16), which faces the light source (L), of the lighting device body wall (12) is of matt formation.

9. Lighting device according to any one of Claims 1 to 8, **characterised in that** the matt broad face (16), which faces the light source (L), of the lighting device body wall (12) is formed by an opal glass layer (14), while the lighting device body wall region which adjoins the opal glass layer (14) on the outside is formed by a transparent layer (15).

10. Lighting device according to any one of Claims 1 to 9, **characterised in that** the lighting device body (11) is assembled from a plurality of lighting device body sub-walls (13) which, with their narrow face pairs in each case pointing towards each other and adjacent to one another, form the strip-like faces (17), in each case defining a slot (S), for the adhesive join with the mating faces (18) of a light-conducting element (E).

11. Lighting device according to any one of Claims 1 to 10, **characterised in that** two approximately shell-like lighting device body sub-walls (13), with their hollow sides facing one another, form with their narrow faces, which are at both ends and form the strip-like faces (17), two slots (S) which in each case hold a light-conducting element (E).

12. Lighting device according to Claim 11, **characterised in that** the cross-sectional contour of both lighting device body sub-walls (13) in each case extends along the same curvature, such as, e.g. in the shape of a parabola, an ellipse or a circle.

13. Lighting device according to any one of Claims 1 to 12, **characterised in that** the outer (EA) and/or the inner (EI) projecting length of each light-conducting element form/forms a fastening region, such as, e.g. a fastening opening (23), for the lighting device (10).

14. Lighting device according to any one of Claims 1 to 13, **characterised in that** the inner projecting length (EI) of the light-conducting element (E) has the contour of an elongate narrow triangle.

15. Lighting device according to Claim 13 or 14, **characterised in that** the broader upper region of the inner projecting length (EI), which has a triangular contour, of the light-conducting element (E) is provided with the fastening opening (23).

16. Lighting device according to any one of Claims 1 to 15, **characterised in that** the outer projecting length (EA) of the light-conducting element (E) has the contour of an elongate narrow rectangle.

## Revendications

1. Dispositif d'éclairage (10) avec une corps de luminaire (11) formant un espace creux de logement (A) pour une source de lumière (L), composé d'un matériau au moins partiellement transparent à la lumière, par exemple de verre, dont au moins une surface large (16) de sa paroi de corps de dispositif d'éclairage (12) est mate, et avec au moins un élément guidant la lumière (E) sensiblement en forme de plaque réalisé en un matériau transparent, par exemple en verre, qui est fixé sur la paroi de corps de dispositif d'éclairage (12) à l'aide de surfaces de joint collées (17, 18), la paroi de corps de dispositif d'éclairage (12) présentant au moins une fente (S) traversant cette dernière sur l'ensemble de l'épaisseur de la paroi, fente dont des surfaces (17) du genre de bandes, délimitant de part et d'autre la fente (S), reçoivent entre elles au moins partiellement l'élément de guidage de lumière (E) et forment, conjointement avec des surfaces conjuguées (18) formées par l'élément guidant la lumière (E), les surfaces de joint collées (17, 18), l'élément de guidage de lumière (E) formant une surface étroite intérieure (19), tournée directement vers l'espace creux de logement (A), recevant la lumière et transmettant la lumière, **caractérisé en ce que** la surface étroite intérieure (19), tournée vers l'espace creux de logement (A), de l'élément de guidage lumière (E) présente une surface transparente, en particulier polie, et l'élément de guidage de lumière (E) forme un dépassement intérieur (EI) pénétrant dans l'espace creux de logement (A).

2. Dispositif d'éclairage selon la revendication 1, **caractérisé en ce que** l'élément de guidage de lumière (E) est disposé, avec sa surface étroite intérieure (19) tournée vers l'espace creux de logement (A), complètement ou partiellement entre les surfaces (17) du genre de bandes de la fente (S).

3. Dispositif d'éclairage selon l'une des revendications 1 ou 2, **caractérisé en ce que** l'élément de guidage de lumière (E), avec sa surface étroite extérieure (21) opposée à l'espace creux de logement (A), est disposé en totalité ou en partie entre les surfaces (17) du genre de bande de la fente (S).

4. Dispositif d'éclairage selon l'une des revendications 1 à 3, **caractérisé en ce que** l'élément de guidage de lumière (E) forme un dépassement extérieur (EA), faisant saillie vers l'extérieur depuis l'espace creux de logement (A).

5. Dispositif d'éclairage selon l'une des revendications 1 à 4, **caractérisé en ce que** les surfaces larges (20) du dépassement intérieur (EI) de l'élément de guidage de lumière (E) présentent chacune une surface transparente, en particulier, polie.

6. Dispositif d'éclairage selon l'une des revendications 1 à 5, **caractérisé en ce que** la surface étroite extérieure (21), s'écartant de l'espace creux de logement (A), de l'élément de guidage de lumière est mate, en particulier est rendue rugueuse.

7. Dispositif d'éclairage selon l'une des revendications 1 à 6, **caractérisé en ce que** les surfaces larges (22) du dépassement extérieur (EA) de l'élément de guidage de lumière(E) sont mates, en particulier sont rendues rugueuses.

8. Dispositif d'éclairage selon l'une des revendications 1 à 7, **caractérisé en ce que** la surface large intérieure (16), tournée vers la source de lumière (L) de la paroi de corps de dispositif d'éclairage (12), est mate.

9. Dispositif d'éclairage selon l'une des revendications 1 à 8, **caractérisé en ce que** la surface large (16) mate, tournée vers la source de lumière (L) de la paroi de corps de dispositif d'éclairage (12), est formée par une couche de verre opale (14), tandis que la zone de paroi de corps de dispositif d'éclairage se raccordant vers l'extérieur à la couche de verre opale (14) est formée par une couche transparente (15).

10. Dispositif d'éclairage selon l'une des revendications 1 à 9, **caractérisé en ce que** le corps de dispositif d'éclairage (11) est obtenu par assemblage de plusieurs parois de partie de corps de dispositif d'éclairage (13) qui, avec leurs paires de surfaces étroites tournées chaque fois les unes vers les autres et voisines les unes des autres, forment les surfaces (17) du genre de bande, délimitant chaque fois une fente (S), pour effectuer l'assemblage par collage avec les surfaces conjuguées (18) d'un élément de guidage de lumière (E).

11. Dispositif d'éclairage selon l'une des revendications 1 à 10, **caractérisé en ce que** deux parois de partie de corps de dispositif d'éclairage (13) à peu près du genre de coques, tournées l'une vers l'autre par leurs côtés creux, forment, par leurs surfaces étroites situées de part et d'autre, formant les surfaces (17) du genre de bandes, deux fentes (S) recevant chacune un élément de guidage de lumière (E).

12. Dispositif d'éclairage selon la revendication 11, **caractérisé en ce que** le contour de section transversale des deux parois de partie de corps de dispositif d'éclairage (13) s'étend chaque fois le long de la même courbure, telle que, par exemple, en forme de parabole, d'ellipse ou de cercle.

13. Dispositif d'éclairage selon l'une des revendications 1 à 12, **caractérisé en ce que** le dépassement extérieur (EA) et/ou intérieur (EI) chaque fois d'un élément de guidage de lumière forme(nt) une zone de fixation, telle que, par exemple, une ouverture de fixation (23), pour le dispositif d'éclairage (10).

14. Dispositif d'éclairage selon l'une des revendications 1 à 13, **caractérisé en ce que** le dépassement intérieur (EI) de l'élément de guidage de lumière (E) présente le contour d'un triangle étroit allongé.

15. Dispositif d'éclairage selon la revendication 13 ou 14, **caractérisé en ce que** la zone supérieure large du dépassement intérieur (EI), à contour en forme de triangle, de l'élément de guidage de lumière (E) est munie de l'ouverture de fixation (23).

16. Dispositif d'éclairage selon l'une des revendications 1 à 15, **caractérisé en ce que** le dépassement extérieur (EA) de l'élément de guidage de lumière (E) présente le contour d'un rectangle étroit allongé.
